# EUROPÄISCHE PATENTANMELDUNG

(11) **EP 4 755 271 A1**
(43) Veröffentlichungstag der Anmeldung: **10.06.2026**
(21) Anmeldenummer: 25216890.1
(22) Anmeldetag: 19.11.2025
(51) Int. Cl.: A47J 31/52, A47J 31/60

(54) **BESTIMMEN EINES VERKALKUNGSGRADS EINER AUTOMATISCHEN KAFFEEMASCHINE**

(30) Priorität: 09.12.2024 DE 102024211714
(71) Anmelder: BSH Hausgeräte GmbH, 81739 München (DE)
(72) Erfinder: Huber, Lukas, 83329 Waging am See (DE); Neustifter, Johannes, 83259 Schleching (DE); Gallinger, Simon, 83301 Traunreut (DE); Nakou-Franke, Gioninta, 83024 Rosenheim (DE); Garschhammer, Florian, 83349 Palling (DE); Daburger, Josef, 83313 Siegsdorf (DE); Schattkowski, Luka, 83224 Grassau (DE); Botros, Peter, 83346 Bergen (DE)

(57) **Zusammenfassung**

Ein Verfahren (200) zum Bestimmen eines Verkalkungsgrads einer automatischen Kaffeemaschine (105) umfasst Schritte des Bestimmens (210) von Prozessparametern der Kaffeemaschine (105) während eines Bezugs; und des Bestimmen (220) des Verkalkungsgrads auf der Basis der Prozessparameter mittels einer Technik des maschinellen Lernens, die auf die Bestimmung des Verkalkungsgrads bezüglich der bestimmten Prozessparameter trainiert ist.

## Beschreibung

Die vorliegende Erfindung betrifft die Bestimmung eines Verkalkungsgrads. Insbesondere betrifft die Erfindung die Bestimmung eines Verkalkungsgrads an einer automatischen Kaffeemaschine.

Eine automatische Kaffeemaschine ist dazu eingerichtet, verschiedene Kaffeespezialitäten oder Zutaten dazu zu bereiten. Beispielsweise kann die Kaffeemaschine Espresso, Milchkaffee, heißes Wasser oder Dampf bereitstellen. In allen Fällen wird Wasser in einer Heizung der Kaffeemaschine erhitzt und entweder als heißes Wasser oder als Dampf bereitgestellt bzw. weiterverarbeitet. Das hindurchströmende Wasser bewirkt eine allmähliche Verkalkung des Geräts, die dessen Funktion schaden kann. Es ist daher sinnvoll, die Kaffeemaschine regelmäßig zu entkalken, beispielsweise, indem ein Verarbeitungstrakt der Maschine mit einer geschmacksneutralen Säure behandelt wird. Hierzu kann eine Entkalkungstablette in Wasser gelöst und die entstehende Flüssigkeit mittels eines Entkalkungsprogramms durch die Maschine prozessiert werden.

Um regelmäßig Entkalkungen zu veranlassen, kann ein Verkalkungsgrad auf der Basis einer Menge prozessierten Wassers bestimmt werden. In die Bestimmung kann ein Härtegrad des Wassers, eine Menge bereitgestellten heißen Wassers und eine Menge bereitgestellten Dampfs eingehen. So kann eine verbleibende Betriebsdauer der Kaffeemaschine bis zu einer erforderlichen Entkalkung zumindest ungefähr bestimmt werden.

Bei einer solchen Bestimmung kann nicht sichergestellt werden, dass eine zurückliegende Entkalkung vorschriftsmäßig bzw. vollständig erfolgt ist. Auch der Härtegrad des Wassers ist unter Umständen falsch angenommen. Der beschriebene Zusammenhang stellt auch nur eine Näherung dar, sodass ein bestimmter Verkalkungsgrad von einem tatsächlichen Verkalkungsgrad signifikant entfernt sein kann. Ist der bestimmte Verkalkungsgrad zu gering, so kann ein zubereitetes Getränk von verminderter Qualität sein, außerdem kann der Betrieb der Kaffeemaschine zu Schäden führen. Ist der bestimmte Verkalkungsgrad zu hoch, so kann eine zu häufige Entkalkung durchgeführt werden, was der Kaffeemaschine ebenfalls schaden kann. Ein Benutzer kann es außerdem als lästig empfinden, die Maschine häufig entkalken zu müssen.

Eine der vorliegenden Erfindung zu Grunde liegende Aufgabe besteht in der Bereitstellung einer verbesserten Technik zum Bestimmen eines Verkalkungsgrads einer automatischen Kaffeemaschine. Die Erfindung löst diese Aufgabe mittels der Gegenstände der unabhängigen Ansprüche. Unteransprüche geben bevorzugte Ausführungsformen wieder.

Nach einem ersten Aspekt der vorliegenden Erfindung umfasst ein Verfahren zum Bestimmen eines Verkalkungsgrads einer automatischen Kaffeemaschine Schritte des Bestimmens von Prozessparametern der Kaffeemaschine während eines Bezugs; und des Bestimmens des Verkalkungsgrads auf der Basis der Prozessparameter mittels einer Technik des maschinellen Lernens, die auf die Bestimmung des Verkalkungsgrads bezüglich der bestimmten Prozessparameter trainiert ist.

Ein Bezug umfasst hierbei das Ausführen einer vorbestimmten Funktion der automatischen Kaffeemaschine, bei welcher Wasser erhitzt wird. Es sind unterschiedliche Bezüge möglich, die sich in ihren zeitlichen Abläufen oder dabei auftretenden Prozessparametern unterscheiden können. Ein erster beispielhafter Bezug kann die Bereitstellung von ca. 100 ml Wasser betreffen, welches auf eine Temperatur von ca. 85 °C erhitzt ist. Ein zweiter beispielhafter Bezug kann die Bereitstellung von Wasserdampf umfassen. Dabei kann Wasserdampf einer vorbestimmten Temperatur und eines vorbestimmten Drucks über eine feste oder variable Zeit hinweg bereitgestellt werden. Ein Bezug eines Getränks wie Milchkaffee kann eine Sequenz von Prozessschritten umfassen, bei denen jeweils Wasser auf eine bestimmte Weise erwärmt werden kann.

Es wurde erkannt, dass der Verkalkungsgrad einer Kaffeemaschine Prozessparameter eines Bezugs subtil beeinflussen kann. Auf der Basis von Variationen der Prozessparameter kann auf den Verkalkungsgrad zurückgeschlossen werden. Ein Zusammenhang zwischen den Prozessparametern und dem Verkalkungsgrad ist jedoch stark nichtlinear und kann durch klassische Methoden kaum brauchbar abgebildet werden. Durch den Einsatz einer Technik des maschinellen Lernens können in den Prozessparametern jedoch Zusammenhänge oder Muster erkannt werden, die auf zugeordnete Verkalkungsgrade hinweisen. Der tatsächliche Verkalkungsgrad der Kaffeemaschine kann daher mit hoher Genauigkeit und Zuverlässigkeit bestimmt werden.

Die Kaffeemaschine umfasst bevorzugt eine Pumpe zum Fördern von Wasser durch eine Heizung. Die Prozessparameter können gemessene und/oder gesteuerte Parameter umfassen. Bevorzugt umfassen die Prozessparameter eine Temperatur am Ausgang der Heizung, eine Oberflächentemperatur der Heizung, eine Flussrate durch die Pumpe, eine Leistungsaufnahme der Pumpe oder eine Leistungsaufnahme der Heizung.

Die betrachteten Prozessparameter können vorteilhaft leicht an bzw. in der Kaffeemaschine bestimmt werden. Ein Sensor zur Erfassung eines zu messenden Prozessparameters kann bereits aus anderen Gründen an der Kaffeemaschine verbaut sein. Ein gesteuerter Parameter kann leicht als beispielsweise elektrisches Signal oder als Nachricht von einer entsprechenden Steuervorrichtung erfasst werden. Das Verfahren kann somit an einer bekannten Kaffeemaschine mit geringem Aufwand umgesetzt werden.

Es ist weiterhin bevorzugt, dass ein Prozessparameter eine zeitliche Ableitung, ein Minimum oder ein Maximum eines bestimmten Werts umfasst. So kann beispielsweise die Änderungsgeschwindigkeit der Temperatur am Ausgang der Heizung als Prozessparameter bestimmt werden. **In** einer weiteren Ausführungsform kann eine minimale Temperatur oder eine minimale Änderungsgeschwindigkeit der Temperatur als Prozessparameter ausgewertet werden. Durch die Betrachtung solcher Derivate können aussagekräftige Prozessparameter bestimmt werden, die die Erkennung eines auf den Verkalkungsgrad hinweisenden Musters weiter erleichtern.

Ein Bezug umfasst bevorzugt mehrere Prozessschritte, und ein Prozessparameter kann auf einem Prozessschritt bezogen sein. Üblicherweise umfasst ein Bezug eine vorbestimmte Anzahl Prozessschritte, wobei während unterschiedlicher Prozessschritte unterschiedliche Einrichtungen oder Elemente der Kaffeemaschine unterschiedlich angesteuert werden. So kann beispielsweise in einem ersten Prozessschritt die Pumpe eingeschaltet werden, um einen gewissen Wasserdruck aufzubauen, in einem darauf folgenden zweiten Prozessschritt Wasser auf eine vorbestimmte Temperatur erhitzt werden und in einem dritten Prozessschritt eine Entnahme erhitzten Wassers oder Dampfs freigegeben werden. Ein Übergang zwischen Prozessschritten kann zeit- oder ereignisgesteuert erfolgen. Durch den Bezug eines Prozessparameters auf einen Prozessschritt kann seine Aussagekraft weiter erhöht werden. Beispielsweise kann die Temperatur an der Oberfläche der Heizung zum Ende des Bezugs signifikanter mit dem Verkalkungsgrad korrelieren als zu einem früheren Zeitpunkt.

Bevorzugt wird das Verfahren während eines Bezugs ausgeführt, der einen vorbestimmten Ablauf umfasst, welcher durch einen Benutzer nicht beeinflussbar oder parametrisierbar ist. So kann sichergestellt werden, dass charakteristische Prozessparameter zuverlässig zueinander in Relation gesetzt werden können. Der vorbestimmte Ablauf kann insbesondere einen Spülvorgang umfassen, der vor oder nach einem Bezug, bei dem ein Getränk oder Dampf bereitgestellt wird, ausgeführt werden kann. Der vorbestimmte Ablauf kann vorbestimmte Steuerparameter oder Steuerwerte umfassen. Beispielsweise kann die Heizung dazu angesteuert werden, das Wasser auf eine vorbestimmte Temperatur zu erhitzen, die zwischen den Bezügen, die der Ausführung des Verfahrens zu Grunde liegen, stets gleich ist.

Der Verkalkungsgrad betrifft bevorzugt eine an der Heizung abgeschiedene Menge Kalk. Allgemeiner kann der Verkalkungsgrad eine Menge Kalk betreffen, die in einem wasserführenden Trakt der Kaffeemaschine abgeschieden ist. Der wasserführende Trakt kann einen Vorratsbehälter für Wasser, die Pumpe, die Heizung und/oder eine Ausgabevorrichtung für Wasser oder Dampf umfassen. Ferner können Leitungen, Rohre oder Schläuche an den genannten Elementen umfasst sein. Außerdem kann ein Ventil, ein Sensor oder eine andere hydraulische Einrichtung vom Trakt umfasst sein.

Der Verkalkungsgrad kann bezüglich eines vorbestimmten Maximums bestimmt sein, der bevorzugt so gewählt ist, dass ein einwandfreier Betrieb der Kaffeemaschine noch möglich ist. Außerdem soll nicht mehr Kalk in der Heizung bzw. dem Trakt abgeschieden sein, als durch den Einsatz einer vorbestimmten Entkalkungsprozedur sicher gelöst werden kann. Die Prozedur kann den Einsatz einer vorbestimmten Menge von Entkalkungsmittel umfassen, das beispielsweise als Flüssigkeit oder in Tablettenform bereitgestellt sein kann. So kann der Verkalkungsgrad beispielsweise in Prozent bezüglich des Maximums angegeben sein. Der Verkalkungsgrad kann auch auf einer anderen Skala angegeben sein, beispielsweise einer Skala, die von 1 bis 10 oder von 0 bis 1 reicht. **In** noch einer weiteren Ausführungsform ist die Skala derart festgelegt, dass der Verkalkungsgrad einen Hinweis auf eine geschätzte Anzahl noch verbleibender Bezüge bis zum voraussichtlichen Erreichen des Maximums gibt.

Es ist zu beachten, dass das hierin vorgestellte Verfahren eine absolute Bestimmung einer abgeschiedenen Menge Kalk erlaubt. Sollte eine Entkalkung nicht oder nicht ordnungsgemäß durchgeführt werden, so kann die absolute Verkalkung oder der Verkalkungsgrad der Kaffeemaschine mittels des Verfahrens trotzdem noch mit guter Genauigkeit bestimmt werden. Das Verfahren kann unabhängig von einer Benutzerangabe sein, beispielsweise eines Härtegrads von verwendetem Wasser.

Weiter bevorzugt umfasst die Technik des maschinellen Lernens eine Regressionsbestimmung. So kann ein Zusammenhang zwischen einem Parameter und einem Verkalkungsgrad bestimmt werden, der eine leichte Bestimmung bezüglich eines Messwerts erlaubt. Insbesondere kann die Technik einen Entscheidungsbaum, einen Zufallswalds, Adaboost, XG Boost oder Explainable Boost umfassen. Die Technik kann insbesondere auch K-means Clustering, Hierarchical Clustering, Local Outlier Factor, oder Autoencoders umfassen.

Die genannten Techniken sind näherungsweise in aufsteigender Reihenfolge bezüglich eines zu betreibenden Aufwands genannt und können auf einer Verarbeitungseinrichtung mit moderater Verarbeitungskapazität in der Kaffeemaschine ausgeführt werden. In einer Ausführungsform kann die Technik des maschinellen Lernens auf einer Verarbeitungseinrichtung ausgeführt werden, die ansonsten eine Funktion der Kaffeemaschine steuert. Die angegebene Technik des maschinellen Lernens kann geringe Anforderungen an Speicherplatz und Verarbeitungskapazität stellen. Weitere Techniken, die sich für das hierin vorgestellte Verfahren eignen, umfassen Graphviz, Matplotlib oder Seaborn. Alle genannten Techniken können mit vertretbarem Aufwand durchgeführt werden und erlauben eine ausreichend genaue Bestimmung des Verkalkungsgrads.

Der Verkalkungsgrad kann zusätzlich auf der Basis einer Menge seit der letzten Entkalkung erhitzten Wassers bestimmt werden. Anders ausgedrückt kann ein klassisches Verfahren zur Abschätzung des Verkalkungsgrads auf der Basis von erhitztem Wasser zusätzlich zu der auf maschinellem Lernen basierenden Technik ausgeführt werden, um die Stärken der klassischen sowie der innovativen Technik miteinander zu verbinden. Die jeweils bestimmten Verkalkungsgrade können beispielsweise nach Art eines Mittelwerts, eines Minimalwerts oder eines Maximalwerts miteinander abgeglichen werden.

Es ist besonders bevorzugt, dass die Technik des maschinellen Lernens lokal an der Kaffeemaschine ausgeführt wird. Dies kann insbesondere leicht erfolgen, wenn die Technik wenig Ressourcen verwendet, beispielsweise wenn sie einen Entscheidungsbaum oder einen Zufallswald umfasst. Vorteilhaft kann die Technik auf einer Steuervorrichtung zur Steuerung der Kaffeemaschine implementiert sein. Wird eine komplexere Technik des maschinellen Lernens eingesetzt, beispielsweise Adaboost, XG Boost oder Explainable Boost, so kann die Bestimmung des Verkalkungsgrads auch außerhalb der Kaffeemaschine erfolgen. Beispielsweise können die erfassten Prozessparameter an eine externe Einrichtung übermittelt werden, wo die Erkennung bzw. Bestimmung des Verkalkungsgrads mittels einer Technik des maschinellen Lernens verbessert durchgeführt werden kann. Ein Ergebnis der Bestimmung kann an die Kaffeemaschine zurückübermittelt werden.

In einer anderen Ausführungsform werden die Prozessparameter an eine von der Kaffeemaschine entfernte Stelle übermittelt, wobei die Technik des maschinellen Lernens auf der entfernten Stelle ausgeführt wird. Ein Ergebnis der Bestimmung, also ein Verkalkungsgrad oder ein Hinweis, ob bzw. dass der bestimmte Verkalkungsgrad einen vorbestimmten Schwellenwert übersteigt, kann dann an die Kaffeemaschine zurück übertragen werden.

Die entfernte Stelle kann sich nahe an der Kaffeemaschine befinden, beispielsweise im selben Zimmer oder im selben Haushalt. Die Übermittlung zu der Stelle kann drahtgebunden oder drahtlos erfolgen. In einer Ausführungsform wird die Technik des maschinellen Lernens auf einem Gerät wie einem Server, einem Hub oder einem Router ausgeführt, der mehrere Hausgeräte eines Haushalts verwalten kann. In einer anderen Ausführungsform kann die entfernte Stelle auch beliebig weit von der Kaffeemaschine entfernt sein. So kann die Stelle etwa einen Server umfassen, der zum Beispiel in einem Datencenter aufgestellt ist, oder auch ganz ortsunabhängig einen Dienst, zum Beispiel in einer Cloud.

Die genannten Techniken können insbesondere auch eine Verkettung von Daten bezüglich der Prozessparameter zu einem Vektor umfassen, der z.B. mittels Transformatoren erreicht werden kann und mittels dem anhand von Prozessparameter-Trainingsdaten eine Anomalie erkannt und damit ein Verkalkungsgrad abgeleitete werden kann. Auch können die genannten Techniken eine Anomalieerkennung durch eine Zeitreihenanalyse mittels Moving Average, Seasonal Decomposition of Time Series, Exponential Smoothing, AutoRegressive Integrated Moving Average, Long Short-Term Memory, Prophet, Unsupervised Learning, DBSCAN, Principal Component Analysis oder One-Class Support Vector Machines umfassen. Dies kann bezüglich des zu betreibenden Aufwands insbesondere Vorteilhaft sein, wenn die Bestimmung des Verkalkungsgrads auch außerhalb der Kaffeemaschine erfolgt.

Gemäß eines weiteren Aspekts der vorliegenden Erfindung umfasst eine Steuervorrichtung für eine automatische Kaffeemaschine wenigstens eine Schnittstelle zur Bestimmung mehrerer Prozessparameter der Kaffeemaschine während eines Bezugs; und eine Verarbeitungseinrichtung. Dabei ist die Verarbeitungseinrichtung dazu trainiert, den Verkalkungsgrad mittels einer Technik des maschinellen Lernens auf der Basis der Prozessparameter zu bestimmen.

Eine Schnittstelle kann einen Sensor oder eine Übergabestelle zur Erfassung eines gesteuerten Parameters umfassen. Eine erste beispielhafte Schnittstelle ist dazu eingerichtet, ein Signal zu erfassen, ob die Heizung eingeschaltet ist oder nicht. Eine zweite beispielhafte Schnittstelle umfasst oder führt zu einem Sensor, der dazu eingerichtet ist, eine Temperatur der Heizung zu bestimmen.

**In** einer besonders bevorzugten Ausführungsform ist die Verarbeitungseinrichtung dazu eingerichtet, einen Bezug der Kaffeemaschine zu steuern. Anders ausgedrückt kann die Verarbeitungseinrichtung dazu eingerichtet sein, eine übliche Funktion der Kaffeemaschine, insbesondere zur Bereitstellung eines Heißgetränks, zu steuern und zusätzlich den Verkalkungsgrad zu bestimmen. Eine hierin beschriebene Technik des maschinellen Lernens kann die Verarbeitungseinrichtung nur wenig belasten, sodass sie beide Funktionen ohne Qualitätsverlust ausführen kann.

Nach noch einem weiteren Aspekt der vorliegenden Erfindung umfasst eine automatische Kaffeemaschine eine hierin beschriebene Steuervorrichtung. Die Kaffeemaschine kann insbesondere zur Zubereitung von Kaffeespezialitäten eingerichtet sein, die eine Bereitstellung heißen Wassers, heißer Milch und/oder von Heißdampf umfassen kann. Die Kaffeemaschine kann teilweise oder vollständig automatisch arbeiten. Eine vollständig automatische Kaffeemaschine kann die Zubereitung eines Kaffeegetränks auf der Basis von gemahlenem Kaffee oder auf der Basis von Kaffeebohnen ohne weiteres Zutun eines Benutzers steuern. Eine teilweise automatische Kaffeemaschine kann die Zubereitung eines Kaffeegetränks steuern, nachdem eine vorbestimmte Menge gemahlenen Kaffees durch einen Benutzer in die Maschine eingelegt wurde. Der gemahlene Kaffee kann lose oder in Kapsel-, Kissen- oder Tablettenform eingelegt werden. Die Kaffeemaschine kann eine Kaffeemühle umfassen, mit welcher eine passende Menge gemahlenen Kaffees bereitgestellt werden kann.

Nach noch einem Aspekt der vorliegenden Erfindung umfasst ein weiteres Verfahren zum Trainieren einer Technik des maschinellen Lernens zum Bestimmen eines Verkalkungsgrads einer automatischen Kaffeemaschine Schritte des Bestimmens von Prozessparametern der Kaffeemaschine während einer Vielzahl Bezüge; dabei des periodischen Bestimmens einer an einer Heizung der Kaffeemaschine abgeschiedenen Menge Kalk; und des Trainierens der Technik bezüglich einander zugeordneter Prozessparameter und Kalkmengen.

Das Trainieren kann bezüglich einer vorbestimmten maximalen Menge Kalk erfolgen, die an der Heizung abgeschieden ist. Eine Anzahl einander zugeordneter Prozessparameter können als Eingabeparameter der Technik des maschinellen Lernens dienen, während die bestimmte Kalkmenge als Label verwendet werden kann. Die Bestimmung einer absoluten Menge Kalk, die an der Heizung oder im Trakt der Kaffeemaschine abgeschieden ist, kann einen erheblichen mechanischen Aufwand erfordern. Beispielsweise kann die Menge bestimmt werden, indem die Heizung aus der Kaffeemaschine ausgebaut, getrocknet und gewogen wird. In einer anderen Ausführungsform kann die Menge des abgeschiedenen Kalks bestimmt werden, indem der Kalk chemisch gelöst und seine Menge in der Lösung analysiert wird. Diese Vorgehensweise hat jedoch den Nachteil, dass der Verkalkungsgrad dabei wieder reduziert wird, sodass zur Bestimmung eines höheren Verkalkungsgrads weitere Experimente nötig sind.

Das Trainieren der Technik des maschinellen Lernens kann einmalig beispielsweise durch einen Hersteller der Kaffeemaschine durchgeführt werden. Die trainierte Technik kann dann an einer Vielzahl baugleicher Kaffeemaschinen eingesetzt werden. In einer Ausführungsform erfolgt das Trainieren auf der Basis von Prozessparametern und Kalkmengen verschiedener Kaffeemaschinen. Dabei sind die Kaffeemaschinen bevorzugt baugleich oder einander in technischer Hinsicht ausreichend ähnlich, um eine Übertragbarkeit von Prozessparametern und Verkalkungsgraden zu gewährleisten. Durch die Berücksichtigung mehrerer Kaffeemaschinen können parallelisiert Trainingsdaten bereitgestellt werden. Außerdem kann die Technik verbessert dazu trainiert werden, maschinenspezifische Eigenheiten unterschiedlicher Kaffeemaschinen zu berücksichtigen. Solche Eigenheiten können sich beispielsweise aufgrund von Fertigungstoleranzen oder Altersgraden verschiedener Kaffeemaschinen ergeben.

In einer weiteren Ausführungsform erfolgt das Trainieren außerhalb einer Kaffeemaschine. Beispielsweise kann das Trainieren mittels einer externen Einrichtung durchgeführt werden, der jeweils bestimmte Verkalkungsgrade und Prozessparameter bereitgestellt werden. Die externe Einrichtung kann auf der Grundlage von Daten einer Vielzahl Kaffeemaschinen arbeiten. Dazu kann die externe Einrichtung einen ausreichend großen Datenspeicher und eine ausreichend leistungsfähige Verarbeitungseinrichtung umfassen. Die trainierte Technik des maschinellen Lernens kann hingegen nur einen moderaten Speicherplatz und bescheidene Kapazitäten einer Verarbeitungseinrichtung erfordern. Das trainierte Modell wird bevorzugt nach dem Training an eine oder mehrere Kaffeemaschinen bereitgestellt, um eine lokale Bestimmung des Verkalkungsgrads zu erlauben.

Nach wieder einem weiteren Aspekt der vorliegenden Erfindung umfasst eine Vorrichtung zum Trainieren einer Technik des maschinellen Lernens zum Bestimmen eines Verkalkungsgrads einer automatischen Kaffeemaschine eine Verarbeitungseinrichtung, die dazu eingerichtet ist, mehrere Prozessparameter der Kaffeemaschine während einer Vielzahl Bezüge zu erfassen; periodische Bestimmungen einer an einer Heizung der Kaffeemaschine abgeschiedenen Menge Kalk zu erfassen; und die Technik auf der Basis der Prozessparameter und jeweils zugeordneter Mengen Kalk zu trainieren.

Eine Menge Kalk, die während eines einzigen Bezugs in der Kaffeemaschine angelagert wird, ist üblicherweise so klein, dass sie die Prozessparameter kaum beeinflusst. Üblicherweise sind mehrere Hundert Bezüge möglich, bevor eine Kaffeemaschine entkalkt werden muss. Es reicht daher üblicherweise aus, Prozessparameter während einer vorbestimmten Anzahl Bezüge auf eine Menge Kalk zu beziehen, die messtechnisch bestimmt wurde. Beispielsweise kann alle ca. 10, ca. 20 oder ca. 50 Bezüge die Menge des abgeschiedenen Kalks messtechnisch bestimmt werden. Die bestimmte Menge kann dann für die bestimmte Anzahl Bezüge als gleichbleibend angenommen werden. In einer anderen Ausführungsform kann eine Interpolation von Verkalkungsgraden über die Bezüge erfolgen.

Nach abermals einem weiteren Aspekt der vorliegenden Erfindung umfasst ein System eine hierin beschriebene Vorrichtung zum Trainieren einer Technik des maschinellen Lernens und wenigstens eine hierin beschriebene automatische Kaffeemaschine. Die Vorrichtung kann dazu eingerichtet sein, mit einer Vielzahl automatischer Kaffeemaschinen zusammenzuarbeiten.

Die Verarbeitungseinrichtung kann dazu eingerichtet sein, ein hierin beschriebenes Verfahren teilweise oder vollständig auszuführen. Dazu kann die Verarbeitungseinrichtung elektronisch ausgeführt sein und beispielsweise einen programmierbaren Mikrocomputer oder Mikrocontroller umfassen. Das Verfahren kann in Form eines Computerprogrammprodukts mit Programmcodemitteln vorliegen. Das Computerprogrammprodukt kann auch auf einem computerlesbaren Datenträger abgespeichert sein. Merkmale oder Vorteile des Verfahrens können auf die Vorrichtung übertragen werden und umgekehrt.

Die Erfindung wird nun unter Bezug auf die beiliegenden Figuren genauer beschrieben, in denen:
- Figur 1: eine schematische Darstellung eines Systems mit einer automatischen Kaffeemaschine;
- Figur 2: ein Ablaufdiagramm eines ersten Verfahrens;
- Figur 3: ein Ablaufdiagramm eines zweiten Verfahrens;
- Figur 4: beispielhafte Prozessparameter an einer Kaffeemaschine;
- Figur 5: eine Korrelation eines Prozessparameters mit einem Verkalkungsgrad; und
- Figur 6: relative Fehler von Verkalkungsgraden, die mit unterschiedlichen Methoden des maschinellen Lernens bestimmt sind,
darstellen.

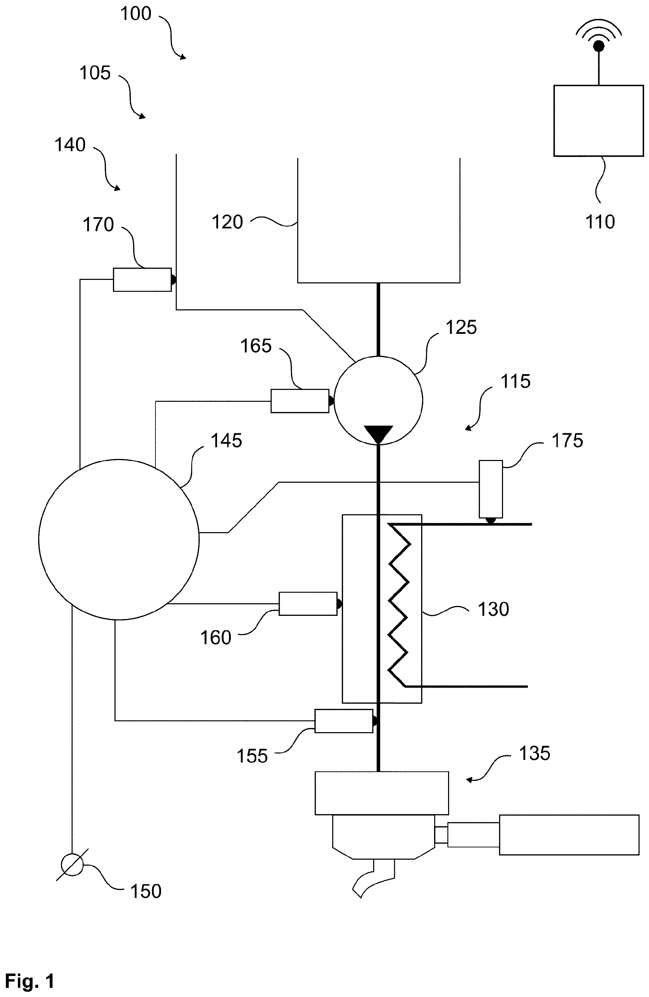

Figur 1 zeigt eine schematische Darstellung eines Systems 100, welches eine automatische Kaffeemaschine 105 und eine externe Einrichtung oder Stelle 110 umfasst. Es ist zu beachten, dass die Darstellung der Kaffeemaschine 105 nicht vollständig ist und sich auf Elemente beschränkt, die im vorliegenden Zusammenhang von besonderem Interesse sind. Die Vorrichtung 110 befindet sich außerhalb der Kaffeemaschine und kann beispielsweise als Server oder als Dienst, insbesondere in einer Cloud, realisiert sein. Eine Kommunikationsverbindung zwischen der Kaffeemaschine 105 und der Vorrichtung 110 kann eine drahtlose Verbindung, beispielsweise per WLAN, Bluetooth oder Mobilfunk, umfassen.

Die Kaffeemaschine 105 umfasst einen Trakt 115, durch den während eines Bezugs Wasser bewegt und stellenweise erhitzt wird. Der Trakt 115 erstreckt sich vorliegend von einem Vorratsbehälter 120 für Wasser durch eine Pumpe 125 und eine Heizung 130 zu einer Brühgruppe 135. Während eines Bezugs, der ein Kaffeegetränk bereitstellt, wird Wasser aus dem Vorratsbehälter 120 mittels der Pumpe 125 durch die Heizung 130 gepresst und dabei von der Heizung 130 erwärmt. Das erhitzte Wasser wird mit einem vorbestimmten Druck in der Brühgruppe 135 mit dort eingelegtem Kaffeepulver in Kontakt gebracht. Aus der Brühgruppe 135 austretende Flüssigkeit kann beispielsweise in eine Tasse bereitgestellt werden. Es ist zu beachten, dass der dargestellte Trakt 115 lediglich vereinfacht ist und beispielsweise noch ein Ventil umfassen kann, sodass heißes Wasser direkt oder zu Dampf erhitztes Wasser bereitgestellt werden kann. Eine Steuer- oder Verarbeitungseinrichtung der Kaffeemaschine 105 zur Steuerung von Elementen, wie der Pumpe 125 und der Heizung 130, ist in Figur 1 nicht dargestellt.

Eine Steuervorrichtung 140 für die automatische Kaffeemaschine 105 umfasst eine Verarbeitungseinrichtung 145, die mit einer Ausgabeeinrichtung 150 verbunden ist. Außerdem ist die Verarbeitungseinrichtung 145 mittels verschiedener Schnittstellen mit Elementen der Kaffeemaschine 105 verbunden, um Steuerparameter während eines Bezugs durch die Kaffeemaschine 105 zu erfassen. Rein beispielhaft sind alle Schnittstellen als Sensoren dargestellt, auch wenn ein Prozessparameter beispielsweise auf der Basis einer Nachricht einer Steuervorrichtung der Kaffeemaschine 105 bestimmt werden kann.

Ein erster Sensor 155 ist dazu eingerichtet, eine Temperatur am Ausgang der Heizung 130 zu bestimmen. Ein zweiter Sensor 160 ist dazu eingerichtet, eine Oberflächentemperatur der Heizung 130 zu bestimmen. Beide Sensoren 155, 160 können an einer Außenseite der Heizung 130 bezüglich des Trakts 115 zum Führen von Wasser angebracht sein. Außerdem können beide Sensoren 155, 160 jeweils als NTC ausgeführt sein.

Ein dritter Sensor 165 ist dazu eingerichtet, eine Flussrate von Flüssigkeit durch die Pumpe 125 zu erfassen. Dazu kann der dritte Sensor 165 beispielsweise eine Bewegungsgeschwindigkeit der Pumpe 125 bestimmen. Die Pumpe 125 ist bevorzugt eine Verdrängerpumpe, sodass ihre Bewegungsgeschwindigkeit einen Hinweis auf die Flussrate gibt. Ein vierter Sensor 170 ist dazu eingerichtet, eine Leistungsaufnahme der Pumpe 125 zu bestimmen. Die Leistungsaufnahme kann einen Hinweis auf einen hydraulischen Druck im Trakt 115 geben. Je höher der hydraulische Druck beispielsweise im Bereich der Brühgruppe 135 ist, desto größer kann die aufgenommen elektrische Leistung der Pumpe 125 zur Förderung eines vorbestimmten Volumens an Flüssigkeit sein. Ein fünfter Sensor 175 ist dazu eingerichtet, eine Leistungsaufnahme der Heizung 130 zu bestimmen. Dazu kann der fünfte Sensor 175 beispielsweise einen Stromsensor oder einen Spannungssensor umfassen.

Die Steuervorrichtung 140 ist dazu eingerichtet, auf der Basis von Prozessparametern, die sie über die Sensoren 155 bis 175 während eines Bezugs mit der Kaffeemaschine 105 erfasst, einen Verkalkungsgrad der Kaffeemaschine 105 zu bestimmen. Der Verkalkungsgrad kann den Trakt 115 und insbesondere die Heizung 130 betreffen. Mittels der Ausgabeeinrichtung 150 kann ein Hinweis auf den bestimmten Verkalkungsgrad ausgegeben werden. Der Hinweis kann eine absolute oder relative Menge aufgenommenen Kalks mit Bezug auf ein vorbestimmtes Maximum umfassen. Der Hinweis kann auch eine geschätzte Anzahl Bezüge betreffen, die durchgeführt werden können, bevor der bestimmte Verkalkungsgrad das vorbestimmte Maximum erreicht. Außerdem kann der Hinweis eine Anzahl durchgeführter Bezüge umfassen, die seit dem letzten Entkalken durchgeführt wurden. In einer weiteren Ausführungsform umfasst der Hinweis eine Aufforderung, die Kaffeemaschine 105 zu entkalken. Die Aufforderung kann an einen Benutzer der Kaffeemaschine 105 gerichtet sein.

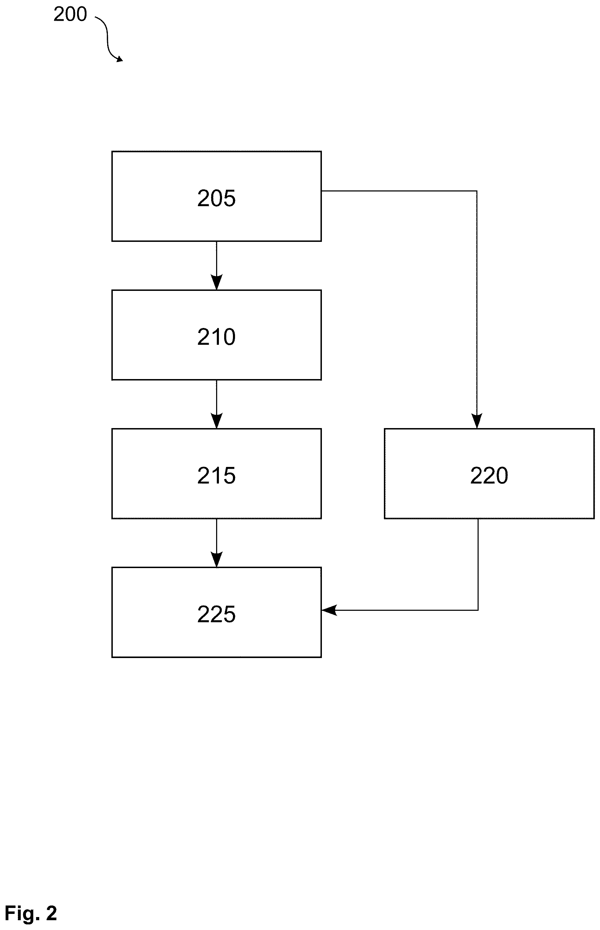

Figur 2 zeigt ein Ablaufdiagramm eines ersten Verfahrens 200. Das erste Verfahren 200 kann bevorzugt vollständig auf einer Steuervorrichtung 140 einer Kaffeemaschine 105 ausgeführt werden.

In einem Schritt 205 kann ein Bezug der Kaffeemaschine 105 erfasst werden. Die Kaffeemaschine 105 kann unterschiedliche Arten von Bezügen durchführen, wobei im Schritt 205 bestimmt werden kann, dass ein gerade stattfindender Bezug von einer vorbestimmten Art ist. Die vorbestimmte Art umfasst insbesondere einen Spülvorgang, der vor oder nach einem Bezug eines Getränks durchgeführt werden kann, um die Kaffeemaschine 105 zu reinigen oder auf einen vorbestimmten technischen Zustand zu bringen. Ein Bezug zum Reinigen der Kaffeemaschine 105 vor einem Getränkebezug wird auch Rinse-On und ein Bezug nach dem Bezug eines Getränks Rinse-Off genannt. Sollte ein gerade stattfindender Bezug nicht von einem vorbestimmten Typ sein, so kann das Verfahren 200 nicht weiter ausgeführt werden.

In einem Schritt 210 können Prozessparameter der Kaffeemaschine 105 bestimmt werden, während der Bezug andauert. Der Bezug kann in unterschiedliche Prozessschritte unterteilt sein, wobei ein Prozessparameter auf einen Prozessschritt bezogen sein kann. Beispielsweise kann ein Prozessparameter beim Übergang von einem Prozessschritt in einen anderen bestimmt werden.

In einem Schritt 215 kann auf der Basis mehrerer bestimmter Prozessparameter mittels einer Technik des maschinellen Lernens, die entsprechend trainiert worden ist, auf einen Verkalkungsgrad der Kaffeemaschine 105 geschlossen werden. Der Verkalkungsgrad kann insbesondere relativ zu einem vorbestimmten Maximum bestimmt werden. Ein minimaler Verkalkungsgrad kann null entsprechen. Dabei ist es auch möglich, einen Verkalkungsgrad zu bestimmen, der größer als der vorbestimmte maximale Verkalkungsgrad ist.

Optional kann parallel zum Schritt 215 der Verkalkungsgrad der Kaffeemaschine 105 mittels eines klassischen Bestimmungsmodells bestimmt werden. Das klassische Modell kann insbesondere eine Menge erhitzten Wassers und eine Menge von bereitgestelltem Dampf berücksichtigen, um bezüglich eines vorbestimmten Härtegrads von Wasser, das dabei verarbeitet wurde, den Verkalkungsgrad der Kaffeemaschine 105 zu schätzen. Ergebnisse der klassischen Bestimmung im Schritt 220 und der Bestimmung mit Methoden der künstlichen Intelligenz im Schritt 215 können miteinander verarbeitet werden.

In einem Schritt 225 kann ein Hinweis auf den bestimmten Verkalkungsgrad bereitgestellt werden. Der Hinweis kann insbesondere eine bevorstehende bzw. fällige Entkalkung der Kaffeemaschine 105 anzeigen. Wird der Hinweis durch einen Benutzer länger ignoriert, so kann die Kaffeemaschine 105 die Durchführung eines Bezugs für ein Heißgetränk verweigern, bis eine Entkalkung stattgefunden hat.

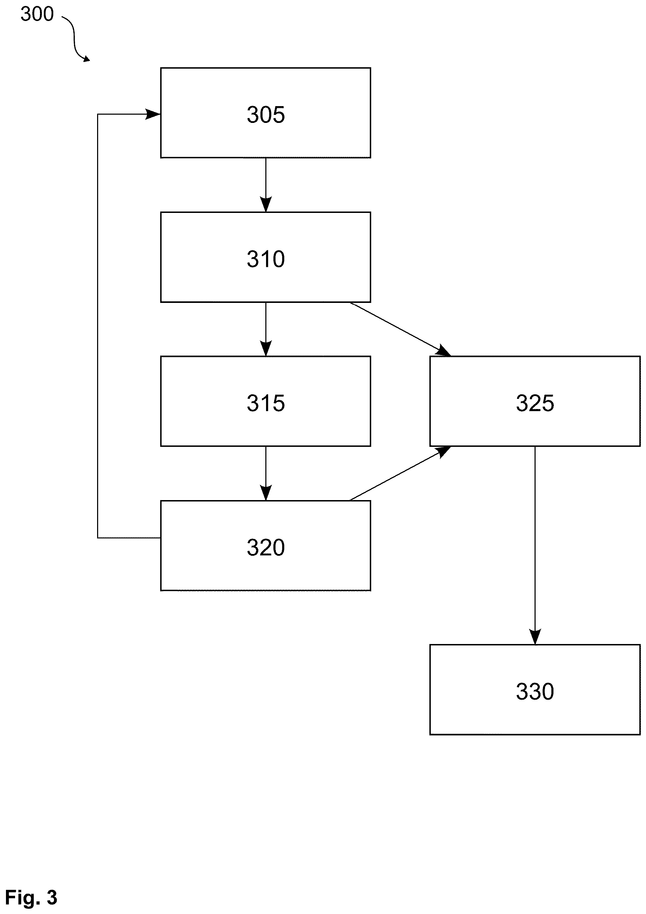

Figur 3 zeigt ein Ablaufdiagramm eines zweiten Verfahrens 300 zum Trainieren einer Technik des maschinellen Lernens für eine hierin vorgeschlagene Technik. Das Verfahren 300 ist dazu eingerichtet, eine Technik bzw. ein Modell zu trainieren, das anschließend im Verfahren 200, insbesondere im Schritt 215, eingesetzt werden kann.

In einem Schritt 305 wird ein Bezug durch die Kaffeemaschine 105 erfasst. In einer Ausführungsform werden nur solche Bezüge erfasst, die später im Verfahren 200 auch ausgewertet werden. In einer anderen Ausführungsform können mehrere und insbesondere alle möglichen Bezüge erfasst werden, die tatsächlich an der Kaffeemaschine 105 durchgeführt werden. Es ist zu beachten, dass die Häufigkeit der Verwendung bestimmter Bezüge von einem Verhalten eines Benutzers der Kaffeemaschine 105 abhängig ist.

In einem Schritt 310 können Prozessparameter bestimmt werden, die in der Kaffeemaschine 105 während der Durchführung des Bezugs anfallen. Dieser Schritt kann dem Schritt 210 im ersten Verfahren 200 entsprechen.

In einem Schritt 315 kann bestimmt werden, ob eine Anzahl durchgeführter Bezüge einen vorbestimmten Schwellenwert übersteigt. Dieser Schwellenwert kann beispielsweise ca. 20 oder ca. 50 betragen. Ist dies der Fall, so kann in einem Schritt 320 eine Menge von Kalk bestimmt werden, die sich im Trakt 115 und insbesondere an der Heizung 130 der Kaffeemaschine 105 abgelagert hat. Dieser Schritt kann den Eingriff eines Servicepersonals erfordern. Eine Anzahl durchgeführter Bezüge kann anschließend auf null gesetzt werden.

In einem Schritt 325 können Trainingsdaten bereitgestellt werden. Ein Satz Trainingsdaten kann mehrere Prozessparameter sowie eine Menge Kalk umfassen, die dem Satz Prozessparameter zugeordnet ist. In der dargestellten Ausführungsform wird so einer Anzahl Sätze Prozessparameter dieselbe Menge Kalk zugeordnet. Diese Vorgehensweise hat sich in der Praxis bewährt und erlaubt es, eine Verkalkung der Kaffeemaschine 105 bis zum Erreichen der vorbestimmten maximalen Menge Kalk im Trakt 115 in sinnvoller Zeit nachzuvollziehen. Dabei werden bevorzugt wenigstens ca. 10, weiter bevorzugt wenigstens ca. 20 bis ca. 50 und noch weiter bevorzugt noch mehr Bestimmungen der Kalkmenge im Schritt 320 durchgeführt.

Auf der Basis der im Schritt 325 bereitgestellten Trainingsdaten kann in einem Schritt 330 eine Technik des maschinellen Lernens dazu trainiert werden, einen bestimmten Verkalkungsgrad anhand eines Satzes einander zugeordneter Prozessparameter zu erkennen.

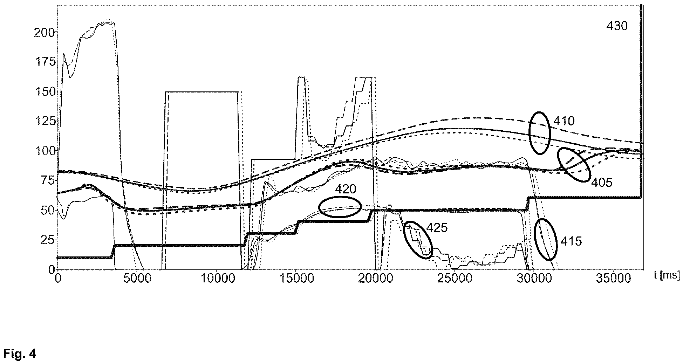

Figur 4 zeigt beispielhafte Prozessparameter an einer Kaffeemaschine 105. In horizontaler Richtung ist eine Zeit angetragen. Die dargestellten Prozessparameter betreffen einen Bezug, der einen Spülvorgang vor einem eigentlichen Getränkebezug (Rinse-On) betrifft.

Ein erster Steuerparameter 405 betrifft eine Temperatur am Ausgang der Heizung 130. Ein zweiter Steuerparameter 410 betrifft eine Temperatur an der Oberfläche der Heizung 130. Ein dritter Steuerparameter 415 betrifft eine Flussrate durch die Pumpe 125. Ein vierter Steuerparameter 420 betrifft eine Leistungsaufnahme der Pumpe 125 und ein fünfter Steuerparameter 425 eine Leistungsaufnahme der Heizung 130. Ein sechster Steuerparameter 430 betrifft einen Prozessschritt. Der sechste Steuerparameter 430 kann auch als eigenständiger Parameter bzw. als Randbedingung für die Steuerparameter 405 bis 425 angesehen werden.

Jeder Steuerparameter 405 bis 425 ist in drei unterschiedlich gestalteten Linien dargestellt. Eine gepunktete Linie betrifft einen Verkalkungsgrad von ca. 5 %, eine durchgezogene Linie einen Verkalkungsgrad von ca. 50 % und eine unterbrochene Linie einen Verkalkungsgrad von ca. 100 %. Es ist zu erkennen, dass die unterschiedlichen Verkalkungsgrade an den unterschiedlichen Steuerparametern 405 bis 425 unterschiedlich stark und zu unterschiedlichen Prozessschritten 430 sichtbar werden. Beispielsweise weist der erste Steuerparameter 405 ungefähr zur Mitte eines abschließenden Prozessschrittes 430 am stärksten auf einen Verkalkungsgrad hin, während der zweite Steuerparameter 410 die Unterscheidung am besten am Ende des letzten Prozessschritts 430 erlaubt.

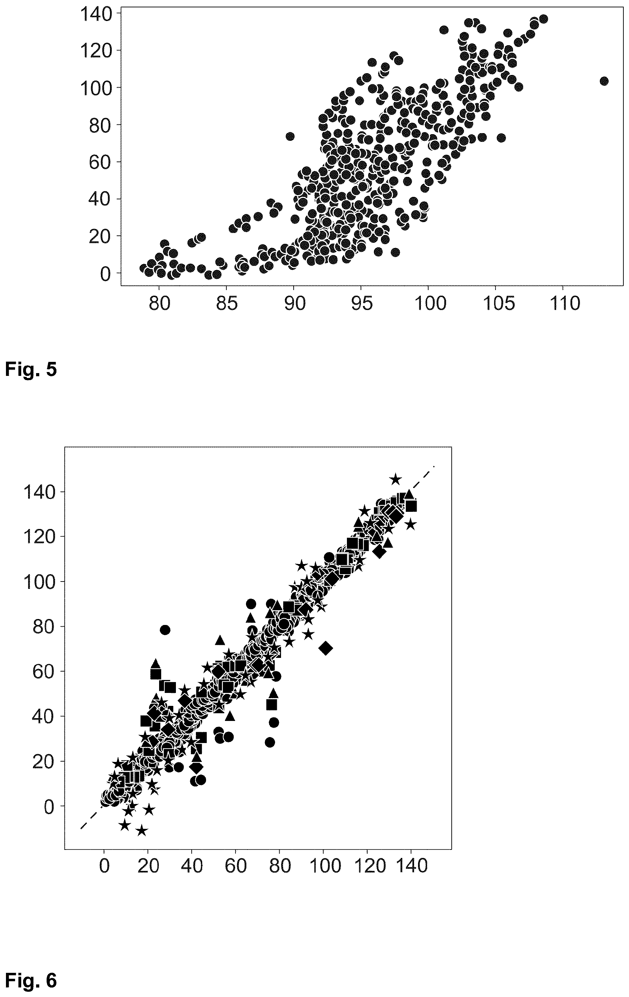

Es hat sich gezeigt, dass keiner der Steuerparameter 405 bis 425 allein eine sichere oder genaue Bestimmung des Verkalkungsgrads der Kaffeemaschine 105 angeben kann. Figur 5 zeigt einen beispielhaften Zusammenhang zwischen einem beispielhaften Steuerparameter 405 in horizontaler Richtung und dem tatsächlichen Verkalkungsgrad in vertikaler Richtung. Es ist zu erkennen, dass ein Zusammenhang vorliegt, dieser jedoch viel zu verrauscht ist, um eine Bestimmung des Verkalkungsgrads mit brauchbarer Genauigkeit zu erlauben.

Mittels einer hierin genannten Methode des maschinellen Lernens wurden Signifikanzen der Steuerparameter 405 bis 425 bezüglich einer Bestimmung des Verkalkungsgrads genauer analysiert. Es hat sich herausgestellt, dass der erste Steuerparameter 405 mit Abstand am stärksten zu einer Bestimmung des Verkalkungsgrads beitragen kann. Eine ausreichend genaue Bestimmung ist jedoch nur möglich, wenn noch einer oder besser mehrere weitere Steuerparameter 410 bis 425 berücksichtigt werden. Auf der Basis der Steuerparameter 405 bis 425 wurden durch Berücksichtigung von Derivaten (zeitliche Ableitung, Minimum, Maximum) insgesamt 15 Steuerparameter generiert, auf deren Basis eine Technik des maschinellen Lernens erst trainiert und dann zum Bestimmen des Verkalkungsgrads eingesetzt wurde.

Ergebnisse der unterschiedlichen Bestimmungen sind in Figur 6 zusammengefasst. In horizontaler Richtung ist ein tatsächlicher und in vertikaler Richtung ein bestimmter Verkalkungsgrad einer Kaffeemaschine 105 dargestellt. Dargestellte Skalen beziehen sich auf einen vorbestimmten maximalen Verkalkungsgrad von 100 %. Die Bestimmungen basieren auf Messungen mehrerer 100 Bezüge einer Kaffeemaschine 105.

Für verschiedene Methoden des maschinellen Lernens ist jeweils ein Streudiagramm dargestellt. Unterschiedliche Modelle sind durch unterschiedliche Symbole gekennzeichnet. Je näher sich die Symbole eines Modells an der Hauptdiagonale des Diagramms befinden, desto geringer sind die Abweichungen der Bestimmungen von den tatsächlichen Werten. Ein EBM (Explainable Boosting Model) ist durch Sterne, ein XG Boost Modell mit zehn Bäumen durch Dreiecke, ein Adaboost Modell mit fünf Bäumen durch Rauten, ein Zufallswald mit 200 Blättern als Quadrate und ein Entscheidungsbaum mit 200 Blättern durch Kreise repräsentiert. Es ist zu erkennen, dass die weitaus meisten Bestimmungen geringen Fehlern unterworfen sind. Signifikante Abweichungen von ca. 20 % oder mehr sind erkennbar, aber selten.

Alle dargestellten Modelle liefern Ergebnisse, die zur Bestimmung eines Verkalkungsgrads brauchbar sind. Zum Zweck der Bestimmung einer Notwendigkeit des Entkalkens der Kaffeemaschine 105 stören die dargestellten Ausreißer kaum. Um eine Empfindlichkeit der Bestimmung gegenüber Ausreißern zu verringern, können beispielsweise mehrere bestimmte Verkalkungsgrade miteinander verarbeitet werden, etwa in Form eines gleitenden Mittelwerts über eine vorbestimmte Anzahl vergangener Bestimmungen. Der Verkalkungsgrad der Kaffeemaschine kann so einfach und mit bisher nicht erreichter Genauigkeit und Zuverlässigkeit bestimmt werden.

### Bezugszeichen

- 100: System
- 105: automatische Kaffeemaschine
- 110: externe Stelle
- 115: Trakt
- 120: Vorratsbehälter
- 125: Pumpe
- 130: Heizung
- 135: Brühgruppe
- 140: Steuervorrichtung
- 145: Verarbeitungseinrichtung
- 150: Ausgabeeinrichtung
- 155: erster Sensor: Temperatur am Ausgang der Heizung
- 160: zweiter Sensor: Oberflächentemperatur der Heizung
- 165: dritter Sensor: Flussrate durch die Pumpe
- 170: vierter Sensor: Leistungsaufnahme der Pumpe
- 175: fünfter Sensor: Leistungsaufnahme der Heizung

- 200: erstes Verfahren
- 205: Bezug erfassen
- 210: Prozessparameter bestimmen
- 215: Verkalkungsgrad mit KI bestimmen
- 220: Verkalkungsgrad nach klassischem Modell bestimmen
- 225: Hinweis auf Entkalkung bereitstellen

- 300: zweites Verfahren
- 305: Bezug erfassen
- 310: Prozessparameter bestimmen
- 315: Anzahl Bezüge > Schwellenwert?
- 320: abgeschiedenen Kalk bestimmen
- 325: Trainingsdaten bereitstellen
- 330: Modell trainieren
- 405: erster Steuerparameter: Temperatur am Ausgang der Heizung
- 410: zweiter Steuerparameter: Temperatur an der Oberfläche der Heizung
- 415: dritter Steuerparameter: Flussrate durch die Pumpe
- 420: vierter Steuerparameter: Leistungsaufnahme der Pumpe
- 425: fünfter Steuerparameter: Leistungsaufnahme der Heizung
- 430: sechster Steuerparameter: Prozessschritt

## Patentansprüche

1. Verfahren (200) zum Bestimmen eines Verkalkungsgrads einer automatischen Kaffeemaschine (105), wobei das Verfahren (200) folgende Schritte umfasst:
- Bestimmen (210) von Prozessparametern der Kaffeemaschine (105) während eines Bezugs; und
- Bestimmen (215) des Verkalkungsgrads auf der Basis der Prozessparameter mittels einer Technik des maschinellen Lernens, die auf die Bestimmung des Verkalkungsgrads bezüglich der bestimmten Prozessparameter trainiert ist.

2. Verfahren (200) nach Anspruch 1, wobei die Kaffeemaschine (105) eine Pumpe (125) zum Fördern von Wasser durch eine Heizung (130) umfasst und die Prozessparameter eine Temperatur am Ausgang der Heizung (130), eine Oberflächentemperatur der Heizung (130), eine Flussrate durch die Pumpe (125), eine Leistungsaufnahme der Pumpe (125) oder eine Leistungsaufnahme der Heizung (130) umfassen.

3. Verfahren (200) nach Anspruch 1 oder 2, wobei ein Prozessparameter eine zeitliche Ableitung, ein Minimum oder ein Maximum eines bestimmten Werts umfasst.

4. Verfahren (200) nach einem der vorangehenden Ansprüche, wobei ein Bezug mehrere Prozessschritte (430) umfasst und ein Prozessparameter auf einen Prozessschritt bezogen ist, und/oder wobei ein Bezug einen vorbestimmten Ablauf umfasst, der durch einen Benutzer nicht beeinflussbar oder parametrisierbar ist.

5. Verfahren (200) nach einem der vorangehenden Ansprüche, wobei der Verkalkungsgrad eine an der Heizung (130) abgeschiedene Menge Kalk betrifft und/oder wobei der Verkalkungsgrad zusätzlich auf der Basis einer Menge seit der letzten Entkalkung erhitzten Wassers bestimmt wird.

6. Verfahren (200) nach einem der vorangehenden Ansprüche, wobei die Technik des maschinellen Lernens eine Regressionsbestimmung mittels eines Entscheidungsbaums, eines Zufallswalds, Adaboost, XG Boost, Explainable Boost, K-means Clustering, Hierarchical Clustering, Local Outlier Factor, oder Autoencoders umfasst, oder eine Verkettung von Daten bezüglich der Prozessparameter zu einem Vektor umfasst, der z.B. mittels Transformatoren erreicht werden kann und mittels dem anhand von Prozessparameter-Trainingsdaten eine Anomalie erkannt und damit ein Verkalkungsgrad abgeleitete werden kann, oder eine Anomalie mittels einer Zeitreihenanalyse mittels Moving Average, Seasonal Decomposition of Time Series, Exponential Smoothing, AutoRegressive Integrated Moving Average, Long Short-Term Memory, Prophet, Unsupervised Learning, DBSCAN, Principal Component Analysis oder One-Class Support Vector Machines umfasst.

7. Verfahren (200) nach einem der vorangehenden Ansprüche, wobei die Technik des maschinellen Lernens lokal an der Kaffeemaschine (105) ausgeführt wird, und/oder wobei die Prozessparameter an eine von der Kaffeemaschine (105) entfernte Stelle übermittelt werden; und die Technik des maschinellen Lernens auf der entfernten Stelle ausgeführt wird.

8. Steuervorrichtung (140) für eine automatische Kaffeemaschine (105), wobei die Steuervorrichtung (140) folgendes umfasst:
- wenigstens eine Schnittstelle (155-175) zur Bestimmung mehrerer Prozessparameter der Kaffeemaschine (105) während eines Bezugs; und
- eine Verarbeitungseinrichtung (145), die dazu trainiert ist, den Verkalkungsgrad mittels einer Technik des maschinellen Lernens auf der Basis der Prozessparameter zu bestimmen.

9. Steuervorrichtung nach Anspruch 8, wobei die Verarbeitungseinrichtung (145) dazu eingerichtet ist, einen Bezug der Kaffeemaschine (105) zu steuern.

10. Automatische Kaffeemaschine (105), umfassend eine Steuervorrichtung (140) nach Anspruch 8 oder 9.

11. Verfahren (300) zum Trainieren einer Technik des maschinellen Lernens zum Bestimmen eines Verkalkungsgrads einer automatischen Kaffeemaschine (105), wobei das Verfahren (200) folgende Schritte umfasst:
- Bestimmen (310) von Prozessparametern der Kaffeemaschine (105) während einer Vielzahl Bezüge;
- dabei periodisches Bestimmen (320) einer an einer Heizung (130) der Kaffeemaschine (105) abgeschiedenen Menge Kalk;
- Trainieren (330) der Technik bezüglich einander zugeordneter Prozessparametern und Kalkmengen.

12. Verfahren (300) nach Anspruch 11, wobei das Trainieren auf der Basis von Prozessparametern und Kalkmengen verschiedener Kaffeemaschinen (105) erfolgt, und/oder wobei das Trainieren außerhalb einer Kaffeemaschine (105) erfolgt.

13. Vorrichtung (110) zum Trainieren einer Technik des maschinellen Lernens zum Bestimmen eines Verkalkungsgrads einer automatischen Kaffeemaschine (105), wobei die Vorrichtung (110) eine Verarbeitungseinrichtung umfasst, die dazu eingerichtet ist,
- mehrere Prozessparameter der Kaffeemaschine (105) während einer Vielzahl Bezüge zu erfassen;
- periodische Bestimmungen einer an einer Heizung (130) der Kaffeemaschine (105) abgeschiedenen Menge Kalk zu erfassen; und
- die Technik auf der Basis der Prozessparameter und jeweils zugeordneter Mengen Kalk zu trainieren.

14. System (100), umfassend eine Vorrichtung (110) nach Anspruch 13 und wenigstens eine automatische Kaffeemaschine (105) nach Anspruch 10.

15. Verwendung einer Technik des maschinellen Lernens, um einen Verkalkungsgrad einer automatischen Kaffeemaschine (105) auf der Basis mehrerer Prozessparameter der Kaffeemaschine (105) während eines Bezugs zu bestimmen, wobei die Technik mittels einer Vielzahl Trainingsdaten trainiert ist, die jeweils die Prozessparameter während eines Bezugs und eine zugeordnete Menge Kalk an einer Heizung (130) der Kaffeemaschine (105) umfassen.
